Europäisches Patentamt

(19) European Patent Office   (11) Publication number:   **0 079 613**
Office européen des brevets                          **B1**

(12)                    **EUROPEAN PATENT SPECIFICATION**

(45) Date of publication of patent specification: **12.03.86**   (51) Int. Cl.⁴: **H 01 S 3/03**

(21) Application number: **82110587.1**

(22) Date of filing: **16.11.82**

(54) **Gas laser apparatus.**

(30) Priority: **18.11.81 JP 183778/81**

(43) Date of publication of application:
**25.05.83 Bulletin 83/21**

(45) Publication of the grant of the patent:
**12.03.86 Bulletin 86/11**

(84) Designated Contracting States:
**CH DE FR GB IT LI NL SE**

(56) References cited:
**US-A-3 420 603**
**US-A-3 555 450**
**US-A-3 836 236**
**US-A-3 889 209**

**PATENTS ABSTRACTS OF JAPAN, vol. 5, no.
186, 25th November 1981, page 858E84;**

(73) Proprietor: **Hitachi, Ltd.**
**5-1, Marunouchi 1-chome**
**Chiyoda-ku Tokyo 100 (JP)**

(72) Inventor: **Iwaki, Kiyoei**
**15-7-2, Suwacho-4-chome**
**Hitachi-shi (JP)**
Inventor: **Nemoto, Kenichi**
**1-4-2, Suwacho-4-chome**
**Hitachi-shi (JP)**

(74) Representative: **Strehl, Peter, Dipl.-Ing. et al**
**Strehl, Schübel-Hopf, Schulz Patentanwälte**
**Widenmayerstrasse 17 Postfach 22 03 45**
**D-8000 München 22 (DE)**

Courier Press, Leamington Spa, England.

## Description

The present invention relates to a laser apparatus according to the first part of claim 1. Such an apparatus is known from US-A-3 836 236.

In a general gas laser apparatus, a discharge tube is filled with a gas medium, for example, a mixed gas containing $CO_2$ gas, $N_2$ gas, He gas and others, and electrodes, for example, a cathode and an anode are disposed within the discharge tube. When a d.c. voltage is applied between the cathode and anode, glow discharge is generated between these electrodes. At this time, population inversion is maintained in the gas medium by the glow discharge, and thus laser light is generated. The laser light travels back and forth between an output mirror and a reflecting mirror which are provided at opposite ends of the discharge tube, in such a manner that the spacing between these mirrors acts as a resonator, and leaves the discharge tube through a central portion of the output mirror. Thus, the output mirror and reflecting mirror are heated by the laser light. In order to suppress a temperature rise at these mirrors, a coolant path is provided in a peripherial portion of each mirror. The structure of the coolant path of the reflecting mirror will be explained below, by way of example. The reflecting mirror is generally made of oxygen free copper, and a peripheral portion of the reflecting mirror is held between a pair of holding plates that is, first and second holding plates. These holding plates form the coolant path along the circumference of the reflecting mirror. Cooling water flows into the coolant path through a supply pipe and flows out through an exit pipe, to cool the reflecting mirror. In order to prevent the cooling water from flowing on the reflecting mirror, the reflecting mirror is held between the first and second holding plates in such a manner that each holding plate is pressed against the reflecting mirror through a sealing member, for example, an O-ring. Thus, the reflecting mirror is applied with a pressure which is directed from opposite surfaces of the reflecting mirror to the inside thereof. Accordingly, wrinkles are generated on a reflecting surface of the reflecting mirror in a region between the peripheral portion of the reflecting mirror and the center axis thereof. In other words, strain causing an uneven reflecting surface is generated. The laser light incident upon such a reflecting surface is subjected to diffused reflection, and therefore the laser output is lowered.

An object of the present invention as claimed is to provide a laser apparatus having a high laser output.

In order to attain the above object, a reflecting mirror according to the present invention has a deformation absorbing groove which is provided on both main surfaces of the reflecting mirror between its peripheral and its central, reflecting portion. Both of the pair of main surfaces of said peripheral portion are lower than the corresponding main surface of the central reflecting portion of the reflecting mirror. When holding means are pressed against the reflecting mirror, the peripheral portion is applied with the pressure and is extended toward the center axis of the reflecting mirror. This extension is absorbed by the deformation absorbing groove. Thus, there is no danger of an uneven reflecting surface appearing between the groove and the axis of the reflecting mirror, and therefore the laser output is never lowered.

The present invention will be apparent from the following detailed description taken in conjunction with the accompanying drawings, in which:

Fig. 1 is a vertical sectional view showing an embodiment of a gas laser apparatus according to the present invention.

Fig. 2A is a detail sectional view taken along the line IIA—IIA of Fig. 1.

Fig. 2B is a sectional view taken along the line IIB—IIB of Fig. 2A.

Fig. 3A is a vertical sectional view of the reflecting mirror shown in Fig. 1.

Fig. 3B is a vertical sectional detail view showing a main part of the reflecting mirror shown in Fig. 3A.

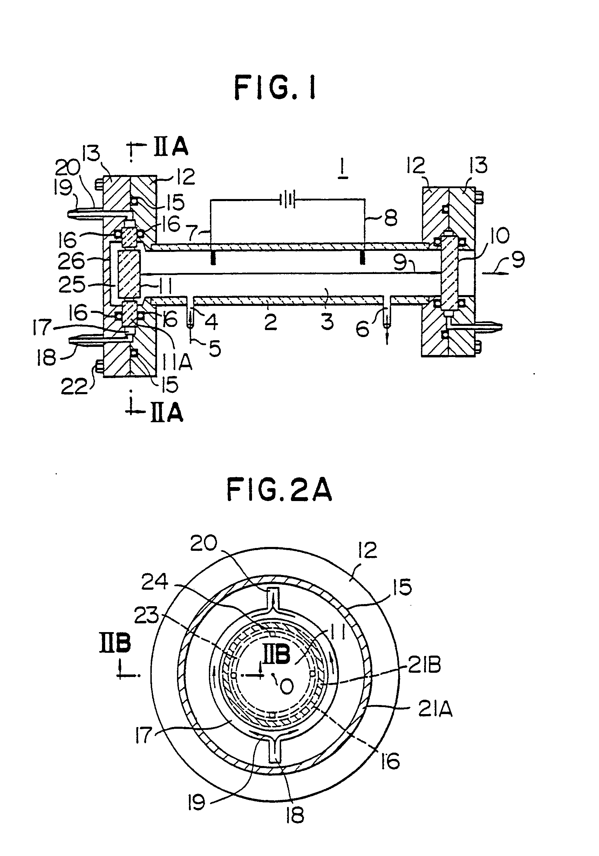

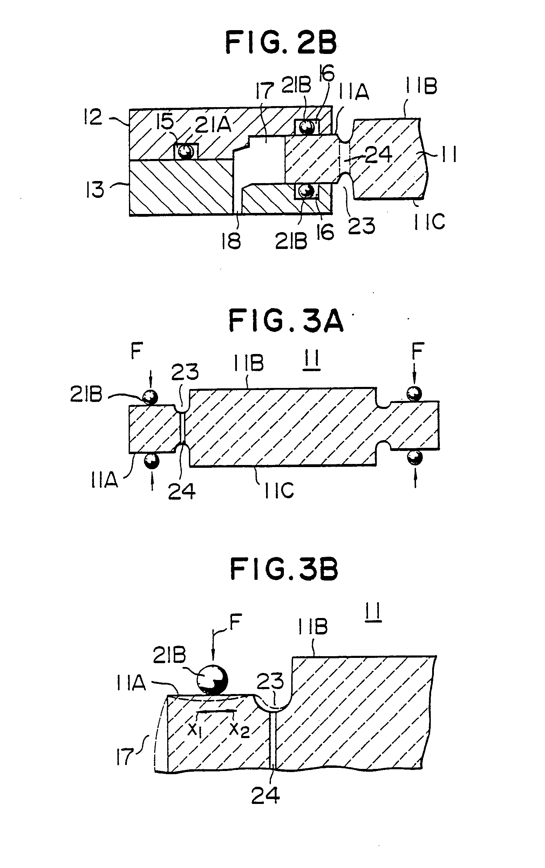

Now, explanation will be made of an axial-flow type gas laser apparatus 1 which is an embodiment of the present invention, with reference to Figs. 1, 2A and 2B.

A discharge tube 2 includes therein a discharge chamber 3, and a gas medium 5 is introduced into the discharge chamber 3 through an inlet 4 in a direction indicated by an arrow. The gas medium 5 is a mixed gas containing $CO_2$ gas, $N_2$ gas, He gas and others, and flows out through an outlet 6 which is provided at an end portion of the discharge tube 2 opposite to the inlet 4. When glow discharge is generated between a cathode 7 and an anode 8 both arranged in the discharge chamber 3, population inversion occurs in the gas medium 5, to generate laser light 9. The laser light 9 thus generated travels back and forth between an output mirror 10 and a reflecting mirror 11 in such a manner that the spacing between the mirrors 10 and 11 acts as a resonator, and is taken out of the discharge chamber 3 through the output mirror 10. Each of the output mirror 10 and reflecting mirror 11 is pressed by and held between first and second holding plates 12 and 13. Since the output mirror 10 and reflecting mirror 11 are held in the same manner, explanation of a holding structure on the side of the output mirror 10 is omitted, and only a holding structure on the side of the reflecting mirror 11 will be explained below.

As shown in Figs. 2A and 2B, a first annular groove 13 is provided in a peripheral portion of the first holding plate 12 spaced for apart from the center axis thereof, and a second groove 16 having a similar shape to the first groove 15 is provided in the first holding plate 12 at a position inside the first groove 15 and in the second holding plate 13 at a position corresponding to the above position of the first holding plate 12. (That is, the second grooves 16 in the first and second holding plates are smaller in diameter than the first groove 15.) A coolant path 17 is formed between the first groove 15 and second grooves 16 along a peripheral portion 11A of the reflecting mirror 11. Cooling water 19 flows into the coolant path 17 through a supply pipe 18 in directions indicated by arrows, and flows out through an exit pipe 20. In order to prevent the cooling water 19 from flowing on the reflecting mirror 11 and flowing outside the first and second holding plates 12 and 13, the first groove 15 and second grooves 16 receive sealing members 21A and 21B, for example, O-rings. When the second holding plate 13 is clamped to the first holding plate 12 by a clamping bolt 2 while keeping the first and second holding plates 12 and 13 in contact with each other, the peripheral portion 11A of the reflecting mirror 11 is pressed by and held between the first and second holding plates 12 and 13 through the sealing members 21B.

Now, the peripheral portion 11A will be explained below in detail with reference to Figs. 2B, 3A and 3B.

A deformation absorbing groove 23 is cut from a reflecting surface 11b into the reflecting mirror 11, and a plurality of through holes 24 are provided at the absorbing groove 23, in order to cause the discharge chamber 3 to communicate with a back chamber 25 by means of the through holes 24. The back chamber 25 is formed between a recess 26 provided in the second holding plate 13 (refer to Fig. 1) and a surface of the reflecting mirror 11 opposite to the reflecting surface.

Next, the function of the absorbing groove 23 will be explained.

When the clamping bolt 22 is turned in a state that the first holding plate 12 is kept in contact with the second holding plate 13, the sealing members 21A and 21B are compressed, and a pressure F is produced in directions indicated by arrows in Fig. 3A. The pressure F is applied to the peripheral portion 11A in such a manner that the surface of the peripheral portion 11A is pressed against the inside thereof, and therefore, the peripheral portion 11A is elongated in $x_1$- and $x_2$-directions shown in Fig. 3B. The elongation in the $x_1$-direction is prevented or absorbed by the coolant path 17, and the absorbing groove 23 can absorb the elongation in the $x_2$-direction. Accordingly, the elongation in the $x_2$-direction is absorbed by the absorbing groove 23, and therefore a region of the reflecting mirror 10 between the center axis thereof and the groove 23 is scarcely affected by the above elongation in the $x_2$-direction. Thus, in this region, wrinkles are scarcely generated in the surface of the reflecting mirror, that is, strain or deformation causing an uneven surface is hard to occur. Therefore, laser light reflected back from the reflecting mirror 11 has not been subjected to diffused reflection, and thus the laser output is not lowered. In other words, the laser output becomes higher.

On the other hand, when the gas laser apparatus 1 is operated, a small amount of molten metal from the electrodes 7 and 8 is deposited on the reflecting surface 11B by the glow discharge. After the operation of the gas laser apparatus 1 has been stopped, the reflecting mirror 11 is detached from the apparatus 1, and the deposited metal is removed by grinding and polishing the reflecting surface 11B. In general, the grinding and polishing operations are performed in the order of rough finishing, medium finishing and fine finishing in accordance with the state of the metal deposited on the reflecting surface. In the case where the absorbing groove would be cut from the same plane as the reflecting surface, a recess would be formed on the periphery of the absorbing groove when the reflecting surface is polished, and therefore it would be difficult to polish the reflecting surface to a flat surface.

However, the absorbing groove 23 according to the present invention is provided in the peripheral portion 11A which is made lower than the reflecting surface 11B, and therefore it is not required to polish the peripheral portion 11A when the reflecting surface 11B is polished. Accordingly, it is possible to polish the reflecting surface 11B to a flat surface, and thus the laser light 9 incident on the reflecting surface 11B is scarcely subjected to diffused reflection.

Further, reflecting surfaces 11B and 11C may be formed on both sides of the reflecting mirror 11. When it is required to carry out maintenance and inspection in a hurry, the reflecting mirror 11 can be used in such a manner that one reflecting surface 11B on which the molten metal has been deposited, faces the back chamber 25 and the other reflecting surface 11C faces the discharge chamber 3.

In the present embodiment, the discharge chamber 3 communicates with the back chamber 25 by means of the through holes 24 to make the pressure in the discharge chamber 3 equal to that in the back chamber 25, with a simple structure. The following advantages can be obtained by drilling the communicating holes 24 at the absorbing groove 23.

(1) Respective positions of the communicating holes 24 are determined on the basis of the absorbing groove 23, and therefore the holes 24 can be readily provided.

(2) Since the thickness of the reflecting mirror 11 at the absorbing groove 23 is smaller than the thickness of other portions of the reflecting mirror 11, the communicating holes 24 can be drilled rapidly, that is, operation efficiency is high.

(3) In the case where the communicating holes 24 are provided in the reflecting mirror 11 at the absorbing groove 23, the burr is hard to produce when the holes 24 are drilled, and therefore the precious reflecting mirror 11 is never damaged by the burr.

The above-mentioned communicating holes are not required in a gas laser apparatus which includes no back chamber. Further, in the foregoing description, explanation of the invention has been made on an axial-flow type gas laser apparatus. However, it is needless to say that the present invention is applicable to other gas laser apparatuses, for example, a cross flow type gas laser apparatus having different directions of the gas flow, the glow discharge path and the laser beam path in which the laser beam path crosses orthogonally with the flow discharge path and the direction of gas flow, or in which all these directions cross orthogonally.

As has been explained in the foregoing, in a laser apparatus according to the present invention, an absorbing groove is provided between the peripheral portion and the central, reflecting portion of a reflecting mirror to prevent strain from being produced in the reflecting surface, and therefore the laser output can be made higher.

## Claims

1. A gas laser apparatus including a discharge tube (2) provided therein with electrodes (7, 8) and filled with a gas medium (5) for generating glow discharge between said electrodes to produce population inversion in said gas medium, thereby generating laser light (9), an output mirror (10) and a reflecting mirror (11) provided on opposite ends of said discharge tube for causing said laser light to travel back and forth between said output and reflecting mirrors in such a manner that a spacing between said output and reflecting mirrors acts as a resonator, and second holding means (13) for pressing through a sealing member (21B) the peripheral portion (11A) of said reflecting mirror (11) against a first holding means (12) fixed to said discharge tube, characterized in that a deformation absorbing groove (23) is provided on both main surfaces of said reflecting mirror (11) between its peripheral (11A) and its central, reflecting portion (11B, 11C), and that said peripheral portion (11A) is formed in such a manner that both of the pair of main surfaces of said peripheral portion (11A) are lower than the corresponding main surface (11B, 11C) of the central, reflecting portion of said reflecting mirror (11).

2. A gas laser apparatus according to claim 1, wherein one of said pair of main surfaces of said peripheral portion (11A) faces a discharge chamber (3) and the other main surface faces a back chamber (25).

3. A gas laser apparatus according to claim 2, wherein a through hole (24) is provided in said peripheral portion (11A) of said reflecting mirror (11) so that said discharge chamber (3) communicates with said back chamber (25) by means of said through hole (24).

4. A gas laser apparatus according to claim 3, wherein said through hole (24) is provided in said peripheral portion (11A) at said deformation absorbing groove (23).

5. A gas laser apparatus according to any one of claims 1 to 4, wherein reflecting surfaces (11B, 11C) are formed on both of said pair of main surfaces of said reflecting mirror (11).

## Patentansprüche

1. Gaslaservorrichtung mit einer Entladungsröhre (2), die in hirem Inneren mit Elektroden (7, 8) versehen und mit einem Gasmedium (5) für die Erzeugung einer Glimmentladung zwischen den Elektroden gefüllt ist, un eine Besetzungsinversion in dem Gasmedium zu erzeugen und dadurch Laserlicht (9) zu generieren, mit einem Ausgangsspiegel (10) und einem reflektierenden Spiegel (11), die an gegenüberliegenden Enden der Entladungsröhre vorgesehen sind, um ein Hin- und Her-laufen des Laserlichts zwischen dem Ausgangsspiegel und dem reflektierenden Spiegel hervorzurufen, so daß ein Zwischenraum zwischen dem Ausgangsspiegel und dem reflektierenden Spiegel als ein Restonator wirkt, und mit einer zweiten Halteeinrichtung (13), um den Randbereich (11A) des reflektierenden Spiegels (11) über ein Dichtungselement (21B) gegen eine erste Halteeinrichtung (12) zu drücken, die an der Entladungsröhre befestigt ist, dadurch gekennzeichnet, daß eine eine Deformation absorbierende Rinne (23) auf beiden Hauptoberflächen des reflektierenden Spiegels (11) zwischen seinem Randbereich (11A) und seinem reflektierenden Mittenbereich (11B, 11C) vorgesehen ist, und daß der Randbereich (11A) so ausgebildet ist, daß beide Oberflächen des Paares von Hauptoberflächen des Randbereichs (11A) niedriger als die entsprechende Hauptoberfläche (11B, 11C) des reflektierenden Mittenbereichs des reflektierenden Spiegels (11) sind.

2. Gaslaservorrichtung nach Anspruch 1, wobei eine Hauptoberfläche des Paares der Hauptoberflächen des Randbereichs (11A) einer Entladungskammer (3) und die andere Hauptoberfläche einer rückwärtigen Kammer (25) zugewandt ist.

3. Gaslaservorrichtung nach Anspruch 2, wobei in dem Randbereich (11A) des reflektierenden Spiegels (11) eine durchgehende Öffnung (24) vorgesehen ist, so daß die Entladungskammer (3) mit der rückwärtigen Kammer (25) mittels dieser durchgehenden Öffnung (24) in Verbindung steht.

4. Gaslaservorrichtung nach Anspruch 3, wobei die durchgehende Öffnung (24) in Randbereich (11A) in der eine Deformation absorbierenden Rinne (23) vorgesehen ist.

5. Gaslaservorrichtung nach einem der Ansprüche 1 bis 4, wobei auf beiden Hauptoberflächen des Paares von Hauptoberflächen des reflektierenden Spiegels (11) reflektierende Flächen (11B, 11C) ausgebildet sind.

## Revendications

1. Dispositif laser à gaz comportant un tube à décharge (2) contenu dans ce dispositif et comportant des électrodes (7, 8) et remplies par un milieu en forme de gaz (5), pour produire une décharge luminescente entre lesdites électrodes une invertsion de population dans ledit milieu en forme de gaz, de maînère à produire une lumière laser (9), un miroir de sortie (10) et un miroir réfléchissant (11) prévus au niveau d'extrémités opposées du tube à décharge de manière à provoquer un déplacement en va-et-vient de la lumière laser entre ledit miroir de sortie et ledit miroir réfléchissant de telle sorte qu'un espace présent entre ledit miroir de sortie et ledit miroir réfléchissant agit à la manière d'un résonateur, et des seconds moyens de maintien (13) servant à repousser à travers un organe d'étanchéité (21b) la partie périphérique (11A) dudit miroir réfléchissant (11) contre des premiers moyens de maintien (12) fixés audit tube à décharge, caractérisé en ce qu'une gorge (23) absorbant les déformations ets prévue dans les deux surfaces principales dudit miroir réfléchissant (11) entre sa partie périphérique (11A) et sa partie centrale réfléchissante (11B, 11C) et que ladite partie périphérique (11A) est formée de telle manière que les deux surfaces principales de ladite partie périphérique (11A) sont plus basses que la surface principale correspondente (11B, 11C) de la partie centrale réfléchissante dudit miroir réfléchissant (11).

2. Dispositif laser à gaz selon la revendication 1, dans lequel une surface dudit couple de surfaces principales de ladite partie périphérique (11A) fait face à une chambre de décharge (3) et que l'autre surface principale fait face à une chambre arriére (25).

3. Dispositif laser à gaz selon la revendication 2, dans lequel un trou traversant (24) est ménagé dans ladite partie périphérique (11A) dudit miroir réfléchissant (11) de telle sort que ladite chambre de décharge (3) communique avec ladite chambre arrière (25) au moyen dudit trou traversant (24).

4. Dispositif laser à gaz selon la revendication 3, dans lequel ledit trou traversant (24) est méngé dans ladite partie périphérique (11A) au niveau de ladite gorge (23) absorbant les déformations.

5. Dispositif laser à gaz selon l'une quelconque des revendications 1 à 4, dans lequel les surfaces réfléchissantes (11B, 11C) sont formées sur les deux surfaces desdits couples de surface principale dudit miroir réfléchissant (11).

# FIG. 1

# FIG. 2A

1

# FIG. 2B

# FIG. 3A

# FIG.3B